Europäisches Patentamt

European Patent Office

Office européen des brevets

(11) Veröffentlichungsnummer: **0 505 718 A1**

## EUROPÄISCHE PATENTANMELDUNG

(21) Anmeldenummer: **92102602.7**

(51) Int. Cl.5: **B60T 8/18**

(22) Anmeldetag: **17.02.92**

(30) Priorität: **28.03.91 DE 4110355**

(43) Veröffentlichungstag der Anmeldung:
**30.09.92 Patentblatt 92/40**

(84) Benannte Vertragsstaaten:
**AT DE ES FR GB IT NL SE**

(71) Anmelder: **KNORR-BREMSE AG**
**Moosacher Strasse 80 Postfach 401060**
**W-8000 München 40(DE)**

(72) Erfinder: **Vollmer, Otto**
**Joergstrasse 50**
**W-8000 München 21(DE)**

(54) Lastabhängiger Bremskraftregler für Druckluftbremsanlagen in Fahrzeugen, insbesondere Nutzfahrzeugen.

(57) Bei einem lastabhängig wirkendenden Bremskraftregler für Druckluftbremsanlagen in Fahrzeugen, deren Regelgröße von Leerlast bis Vollast über ein auf der Steuerkurve eines Steuerkörpers geführtes Stellglied (Stößel 5) einstellbar ist, sind Mittel vorgesehen, welche die Postition des Stellgliedes (Stößel 5) bei Bremsbetätigung fixieren, derart, daß eine Umschaltung von dynamischer Wirkungsweise des Bremskraftreglers auf statische Wirkungsweise erfolgt. Diese Mittel beinhalten einen am Außenumfang des Stellgliedes durch einen Steuerdruck verschiebbaren Ringkolben (27), welcher über ein kraftumlenkendes bzw. kraftübersetzendes Element (elastische Masse 41; Kugeln 45) auf ein gegenüber dem Außenumfang des Stellgliedes in Reibkontakt bringbares Klemmelement (Klemmhülse 35) einwirkt. Die am Außenumfang des Stellglieds im Gehäuse (33) des Bremskraftreglers abgestützte Klemmhülse (35) wirkt bei Druckbeaufschlagung als Bremselement, welches unter Reibkontakt den Stößel (5) zu fixieren vermag.

Fig. 2

Die Erfindung betrifft einen lastabhängigen Bremskraftregler nach dem Gattungsbegriff des Patentanspruches 1.

Bremskraftregler der gattungsgemäßen Art werden in Zugfahrzeugen, aber auch in Anhänger-Fahrzeugen verwendet, so z.B. an der Vorderachse des Fahrzeuges; die Vorderachse ist jedoch in stärkerem Maße als die Hinterachse beim Bremsverzögern des Fahrzeuges dynamischen Achslastverlagerungen ausgesetzt. Die durch die dynamischen Achslastverlagerungen verursachten starken Nickbewegungen der Vorderachse könnten Einstellungen des Bremskrafteglers verursachen, welche zu progressiv fortschreitenden Abbremsungen führen können.

Um diesem Problem zu begegnen, wurden bereits Einrichtungen (DE-PS 19 34 784) zum Fixieren des Stellgliedes des Bremskraftreglers geschaffen, welche einen das Stellglied des Bremskraftreglers umgebenden Feder-Klemmring und einen koaxial zum Stellglied angeordneten, in axialer Richtung mit dem Klemmring in Wirkverbindung bringbaren Kolben aufweisen. Wird der Kolben mit dem Bremsdruck beaufschlagt und auf diese Weise gegen den Feder-Klemmring gedrückt, so wird das Stellglied infolge der Reduzierung des Innendurchmessers des Feder-Klemmringes in seiner momentanen Position arretiert, bis der Bremsdruck wieder weggenommen wird.

Einrichtungen dieser bekannten Art sind baulich verhältnismäßig aufwendig beschaffen, d.h. es sind innerhalb des Bremskraftreglergehäuses Klemm- und Stellglieder erforderlich, welche nicht immer ein zeitgenaues Fixieren des Stellgliedes gewährleisten. Im besonderen können auch Probleme an den Dichtungen auftreten, welche zur Vermeidung von Stauchungen und daraus resultierenden Unebenheiten in der Anlagefläche im allgemeinen mit Spiel eingebaut werden müssen, wobei ein Verschieben des Stellgliedes in axialer Richtung während des Klemmvorganges nicht vollständig ausgeschlossen werden kann.

Davon ausgehend besteht die Aufgabe der Erfindung darin, Bremskraftregler der gattungsgemäßen Art mit baulich einfachen Mitteln so auszugestalten, daß das Fixieren des Stellgliedes innerhalb kürzester Zeit sicher und wirksam herbeigeführt werden kann, ohne daß die in Verbindung mit Dichtungen und Klemmpaarungen bekannter Art auftretenden Probleme in Kauf genommen werden müßten.

Zur Lösung dieser Aufgabe dienen die Merkmale nach dem Kennzeichnungsteil des Patentanspruches 1.

Die Vorrichtung zur Überführung des Bremskraftreglers von dynamischer statische Wirkungsweise ist baulich einfach beschaffen und sehr wirksam in der Funktion, da es mit Hilfe der elatischen Masse bzw. mehrerer am Umfang der Klemmhülse befindlicher Kugeln ohne weiteres und ohne Gefahr des Verklemmens möglich ist, eine Umlenkung der Axialkräfte des Ringkolbens auf die Klemmhülse vorzunehmen. Elastomermassen bzw. elastische Massen für die Kraftumlenkung und -verstärkung verursachen keinerlei Dichtprobleme, welche bei rein hydraulischer Betätigung zu erwarten wären. Das Klemmelement ist im allgemeinen geschlitzt und kann als Reibelement ausgebildet sein, welches bei radial nach innen gerichteter Druckbeaufschlagung sofort in Reibkontakt und in Bremsstellung gegenüber dem Stößel des Bremskraftreglers gelangt, so daß eine sofortige Umschaltung in die statische Wirkungsweise ermöglicht ist. Durch geeignete Wahl der krafübertrgenden Flächen von Ringkolben und elastischer Masse ist es auf einfache Weise möglich, jedes erwünschte Übersetzungsverhältnis zur Klemmbetätigung zu erreichen. In gleicher Weise ist bei Verwendung der Kugeln als kraftübertragenden Elemente möglich, sowohl den Durchmesser der Kugeln als auch den Winkel der Schrägfläche des Ringkolbens in erwünschter Weise zu variieren, um die benötigte Klemmkraft zu erzielen.

Der am Innenumfang der Klemmhülse einsetzbare Sprengring vermittelt in gleicher Weise eine zuverlässige Funktion, d.h. bei Druckentlastung der Klemmhülse wird diese durch den Sprengring in ausreichendem Maße gespreizt, derart, daß der Reibkontakt zwischen Stößel und Klemmhülse vollständig unterbrochen wird.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Fig.1    ist eine schematische Ansicht eines Bremskraftreglers gemäß dem Stand der Technik unter Darstellung der beispielhaft vorgesehenen Einbaulage der in den nachfolgenden Figuren 2 und 3 dargestellten erfindungsgemäßen Einrichtung;

Fig.2    ist eine Teilschnittansicht einer Klemmeinrichtung gemäß einer ersten Ausführungsform der Erfindung; und

Fig.3 und 4    sind der Fig.2 vergleichbare Teilschnittansichten von Klemmeinrichtungen gemäß weiteren Ausführungsformen der Erfindung.

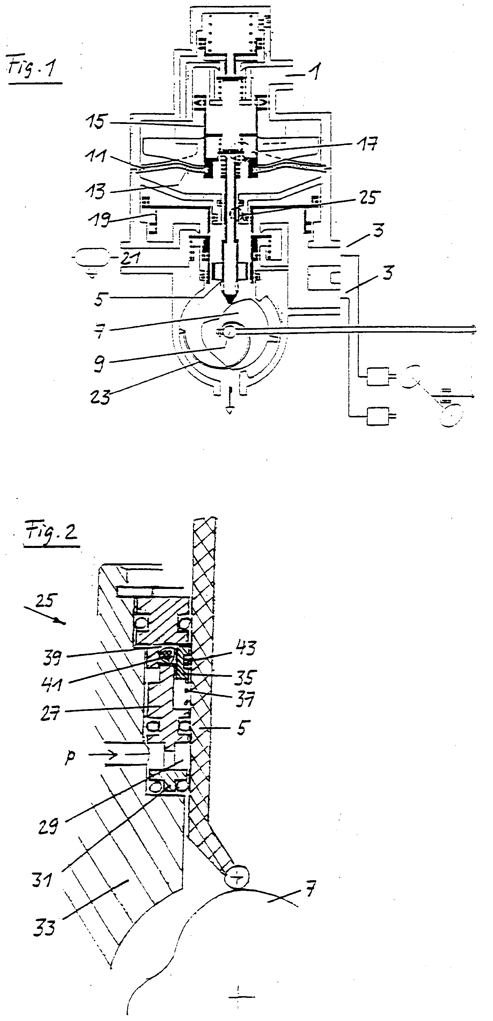

In Fig.1 der Zeichnung ist ein lastabhängiger Bremskraftregler gemäß dem Stand der Technik dargestellt; dieser arbeitet nach dem Membranprinzip, wobei ein eingesteuerter Druck am Einlaß 1 des Bremskraftreglers auf einen ausgesteuerten Bremsdruck am Auslaß 3 reduziert wird. In Abhängigkeit vom Steuerhub des Stößels 5, der über den Verstellnocken 7 und die Anlenkung an der Welle 9 der Beladung des Fahrzeuges proportional ist, wird die durch eine abgestützte Membrane 11 dargestellte, wirksame, sekundärseitige Steuerfläche 13 eines Stufenkolbens 15 verändert. Mit Hilfe dieses Stufenkollbens und der darin integrierten Ventileinheit 17 wird der am Anschluß 1 eingesteuerte Bremsdruck um ein variierbares Verhältnis reduziert und beaufschlagt den Kolben 19 eines integrierten Relaisventils. Am Anschluß 21 steht der Vorratsdruck an; über die Anschlüsse 3 gelangt der ausgesteuerte Druck zu den Bremszylindern des Fahrzeugs.

Eine Besonderheit des dargestellten Bremskraftreglers gemäß dem Stand der Technik ist die Sicherstellung einer mittleren Bremsdruckreduzierung bei Bruch des Anlenkgestänges. Der Verstellnocken 9 wird in einem derartigen Fall durch eine Rückstellfeder 23 nach rechts verdreht, so daß der Stößel 5 etwa die Hälfte des möglichen Hubes macht und die Druckreduzierung einem halb beladenen Fahrzeug entspricht.

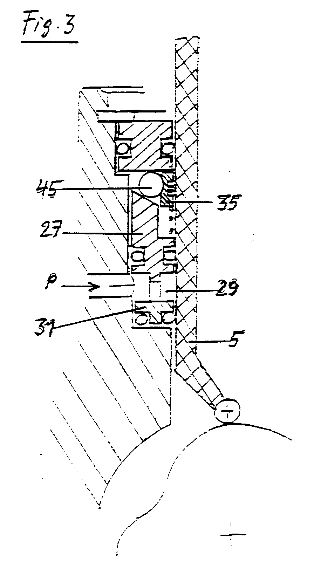

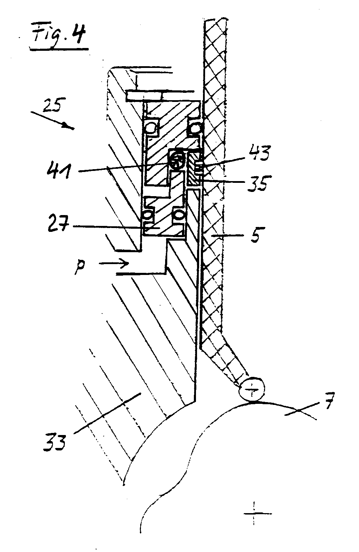

Die insoweit beschriebene Funktionsweise des Bremskraftreglers entspricht der dynamischen Auslegung, d.h., daß in den Bremskraftregler und somit in die Betätigung des Bremsluftteils ständig eine lastabhängige Größe eingeht, welche durch die Position des Verstellnocken und dessen Einflußnahme auf den Stößel 5 versursacht wird. Erfindungsgemäß ist der Bremskraftregler mit einer in im Bereich der Stößeldurchführung angeordneten, hinsichtlich der Position in Fig.1 mit einem umschriebenen Kreis wiedergegebenen Einrichtung 25 versehen, welche im einzelnen in den Figuren 2 und 3 dargestellt ist, und welche es gestattet, von der dynamischen Wirkungsweise des Bremskraftreglers zu einer statischen Wirkungsweise umzuschalten. Die in Fig.1 hinsichtlich ihrer Position angedeutete Einrichtung 25 weist gemäß Fig.2 und 3 am Außenumfang des Stößels 5 einen Ringkolben 27 auf, welcher gegenüber dem Außenumfang des Stößels 5 und gegenüber dem Innenunfang der den Ringkolben 27 aufnehmenden Kammer abgedichtet geführt ist. An seiner Unterseite ist der Ringkolben 27 im dargestellten Ausführungsbeispiel vom eingesteuerten Druck beaufschlagt, d.h. vom gleichen Druck, welcher am Einlaß 1 des Bremskraftreglers ansteht. Die den eingesteuerten Druck führende Kammer 29 ist mittels eines Dichtelements 31 in dargestellter Weise gegenüber dem Spalt zwischen dem Stößel 5 und dem Gehäuse 33 abgedichtet. In der Darstellung nach Fig.1 befindet sich oberhalb des Ringkolbens 27 eine Klemmhülse 35, welche sich mittels einer Feder 37 am Ringkolben 27 abstützt. Die Klemmhülse 35 ist als geschlitzte Hülse ausgebildet, welche bei Durchmesserreduzierung mit dem Außenumfang des Stößels 5 in Reibberührung gelangt und in nachfolgender Weise zur Arretierung des Stößels dient. Innerhalb der die Klemmhülse umgebenden Kammer 39 befindet sich eine elastische Masse 41, z.B. aus Silikon oder vergleichbarem Elastomer, welche im wesentlichen hydraulische Wirkungsweise hinsichtlich der Weiterleitung von Kräften besitzt. Die elastische Masse 41 ist in der Lage, die vom Ringkolben 27 einwirkenden Kräfte radial nach außen und nach innen gerichtet weiterzuleiten, derart, daß die Klemmhülse 35 zusammengepreßt wird und in Reibkontakt mit dem Stößel 5 gelangt.

Die Wirkungsweise der vorstehend unter Bezugnahme auf Fig.1 beschriebenen Ausführungsform eines Ausführungsbeispieles gemäß der Erfindung ist wie folgt :

Bei Druckbeaufschlagung des Bremskraftreglers wird der Ringkolben 27 vom eingesteuerten Druck beaufschlagt, d.h. vom gleichen Druck, der am Einlaß 1 des Bremskraftreglers ansteht (Fig.1). Bei einer nach oben gerichtete Verschiebung des Ringkolbens 27 gibt die in der Kammer 39 befindliche elastische Masse 41 den sich aufbauenden Druck in allen Richtungen, also auch radial nach innen gerichtet weiter, derart, daß die Klemmhülse 35 zusammengepreßt wird und sich unter Reibkontakt an den Stößel 5 anlegt. Der Stößel 5 wird auf diese Weise arretiert, so daß die statische Funktionsweise des Bremskraftreglers sichergestellt ist.

Als elastische Masse 41 kann jede beliebige, der Funktion nach bekannte Elastomermasse verwendet werden; der Vorteil der Verwendung einer derartigen Elastomermasse liegt insbesondere darin, daß keine Leckprobleme entstehen, wie sie bei Verwendung von Flüssigkeiten auftreten, d.h. es sind Elastomermassen bekannt, welche nicht die Neigung besitzen, in die Zwischenräume zu kriechen und Probleme der Undichtigkeit hervorzurufen. Nach Druckentlastung an der Klemmhülse 35 kehrt diese wieder in ihre Ausgangslage zurück, d.h. sie weitet sich wieder etwas auf, wobei am Innenumfang der Klemmhülse ein Sprengring 43 eingesetzt sein kann. Der Sprenring bewirkt nach Druckentlastung ein sicheres Aufheben des Reibkontaktes bzw. Kraftschlusses zwischen der Klemmhülse und dem Stößel, d.h., daß die Klemmhülse vom Außenumfang des Stößels wieder abhebt.

Bei der in Fig.3 wiedergegebenen weiteren Ausführungsform gemäß der Erfindung sind anstelle der elastischen Masse 41 mehrere Kugeln 45 am Außenumfang der Klemmhülse 35 vorgesehen. Die Klemmhülse kann hierbei als Käfig wirken. Das den Kugeln zugewandte Ende des Ringkolbens 27 ist mit einer Schrägfläche 47 versehen, welche bei Druckbeaufschlagung des Ringkolbens 27 gegenüber den Kugeln wirkt und diese in Richtung der Klemmhülse drückt, derart, daß die Klemmhülse mit dem Außenumfang des Stößels in Reibkontakt gerät, so daß der Stößel arretiert wird. In gleicher Weise wie bei der Ausführungsform nach Fig.2 kann am Innenumfang der Klemmhülse ein Sprengring 43 vorgesehen sein, um das Lösen der Klemmhülse vom Außenumfang des Stößels nach Druckentlastung sicherzustellen.

Fig. 4 der Zeichnung zeigt eine Ausführungsform gemäß der Erfindung, bei welcher ein Minimum an O-Ring-Reibung am Stößel 5 besteht; fernerhin wurde auf die achsial auf die Klemmhülse 35 wirkende Feder 37 verzichtet, was zu einer Reduzierung der Reibung an der Klemmhülse in radialer Richtung beiträgt.

**Bezugzeichenliste**

| 1 | Einlaß |
|---|---|
| 3 | Auslaß |
| 5 | Stößel |
| 7 | Verstellnocken |
| 9 | Welle |
| 11 | Membrane |
| 13 | Steuerfläche |
| 15 | Stufenkolben |
| 17 | Ventileinheit |
| 19 | Kolben |
| 21 | Anschluß |
| 23 | Rückstellfeder |
| 25 | Einrichtung |
| 27 | Ringkolben |
| 29 | Kammer |
| 31 | Dichtelement |
| 33 | Gehäuse |
| 35 | Klemmhülse |
| 37 | Feder |
| 39 | Kammer |
| 41 | Elastische Masse |
| 43 | Sprengring |
| 45 | Kugel |
| 47 | Schrägfläche |

**Patentansprüche**

1. Lastabhängiger Bremskraftregler für Druckluftbremsanlagen in Fahrzeugen, insbesondere Nutzfahrzeugen, mit einem lastabhängig beeinflußten Steuerkörper, welcher eine Regelgröße von Leerlast bis Vollast mittels eines gegenüber einem Bremsluftteil des Reglers wirkenden Stellgliedes einstellt, wobei sich das Stellglied auf einer Steuerkurve des Steuerkörpers abstützt und dieser gegen die Kraft einer Regelfeder lastabhängig verlagerbar ist, gekennzeichnet durch einen das Stellglied (Stößel 5) umgebenden, vom ein- oder ausgesteuerten Druck des Bremskraftreglers verschiebbaren Ringkolben (27), eine in axialer Fortsetzung des Ringkolbens (27) am Außenumfang des Stellglieds (Stößel 5) geführte Klemmhülse (35), und ein bei Druckbeaufschlagung des Ringkolbens (7) dessen Kraft auf die Klemmhülse (35) übertragendes Element (41;45).

2. Lastabhängiger Bremskraftregler nach Anspruch 1, dadurch gekennzeichnet, daß das kraftübertragende Element aus einer elastischen Masse (41) (Elastomermasse) besteht, welche sich in einer Kammer (39) in axialer Fortsetzung des Ringkolbens (27) und radial außerhalb der Klemmhülses (35) befindet, und daß die Klemmhülse (35) geschlitzt ist, derart, daß sie durch die elastische Masse in Reibkontakt mit dem von ihr umgebenden Stellglied (Stößel 5) bewegbar ist.

3. Lastabhängiger Bremskraftregler nach Anspruch 1, dadurch gekennzeichnet, daß das Element aus mehreren am Umfang der Klemmhülse (35) unter Abstand zueinander angeordneten Kugeln (45) besteht, und daß die den Kugeln (45) stirnseitig zugewandte Fläche des Ringkolbens (27) als Schrägfläche (47) ausgebildet ist, derart, daß die Kugeln bei Druckbeaufschlagung des Ringkolbens radial nach innen gegenüber der Klemmhülse (35) wirken.

4. Lastabhängiger Bremskraftregler nach einem der vorangehenden Ansprüche, dadurch gekennzeichnet, daß die Klemmhülse (35) geschlitzt ist bzw. sich nicht über den gesamten Außenumfang des Stellglieds (Stößel 5) erstreckt, und daß am Innenumfang der Klemmhülse ein im entlasteten Zustand die Klemmhülse unter Abstand vom Stellglied haltender Sprengring (43) eingesetzt ist.

5. Lastabhängiger Bremskraftregler nach Anspruch 3, dadurch gekennzeichnet, daß die Klemmhülse als Käfig für die Kugeln (45) ausgebildet ist.

6. Lastabhängiger Bremskraftregler nach einem der vorangehenden Ansprüche, dadurch gekennzeichnet, daß sich die Klemmhülse einerseits am Gehäuse des Bremskraftreglers und andererseits mittels einer Feder (37) am Ringkolben abstützt.

7. Lastabhängiger Bremskraftregler nach einem der vorangehenden Ansprüche, dadurch gekennzeichnet, daß sich die Klemmhülse mit beiden Stirnseiten gehäuseseitig bzw. an ei-

nem gehäusefesten Teil abstützt.

Fig.1

Fig.2

Fig.3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 106 014 (WABCO)<br>* Seite 5, Zeile 4 - Seite 6, Zeile 5; Abbildung 1 *<br>--- | 1,2 | B60T8/18 |
| A | GB-A-2 021 718 (BOSCH)<br>* Seite 2, Zeile 58 - Zeile 77; Abbildungen 6,7 *<br>--- | 1,2 | |
| A | DE-U-8 805 352 (BOSCH)<br>* Seite 3, Absatz 5 *<br>* Seite 4, Absatz 3 - Seite 5, Zeile 7; Abbildung 1 *<br>--- | 1,2 | |
| A | DE-U-8 805 351 (BOSCH)<br>* Seite 3, Absatz 5 *<br>* Seite 4, Absatz 3 - Seite 5, Zeile 7; Abbildung 1 *<br>----- | 1,2 | |

RECHERCHIERTE SACHGEBIETE (Int. Cl.5 )

B60T

Der vorliegende Recherchenbericht wurde für alle Patentansprüche erstellt

| Recherchenort | Abschlußdatum der Recherche | Prüfer |
|---|---|---|
| BERLIN | 23 JUNI 1992 | BLURTON M.D. |